(19) **Europäisches Patentamt / European Patent Office / Office européen des brevets**

(11) **EP 3 490 957 B1**

(12) **EUROPÄISCHE PATENTSCHRIFT**

(45) Veröffentlichungstag und Bekanntmachung des Hinweises auf die Patenterteilung:
27.05.2020   Patentblatt 2020/22

(21) Anmeldenummer: **17745967.4**

(22) Anmeldetag: **29.06.2017**

(51) Int Cl.:
*C04B 35/443* [(2006.01)]    *B32B 18/00* [(2006.01)]
*C04B 35/486* [(2006.01)]    *C04B 35/645* [(2006.01)]
*C04B 41/00* [(2006.01)]

(86) Internationale Anmeldenummer:
**PCT/DE2017/000189**

(87) Internationale Veröffentlichungsnummer:
**WO 2018/019316 (01.02.2018 Gazette 2018/05)**

(54) **VERFAHREN ZUR VERSTÄRKUNG VON TRANSPARENTEN KERAMIKEN SOWIE KERAMIK**

METHOD FOR REINFORCING TRANSPARENT CERAMICS, AND CERAMIC

PROCÉDÉ DE RENFORCEMENT DE CÉRAMIQUES TRANSPARENTES AINSI QUE CÉRAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.07.2016   DE 102016009153**
**11.08.2016   DE 102016009730**

(43) Veröffentlichungstag der Anmeldung:
**05.06.2019   Patentblatt 2019/23**

(73) Patentinhaber: **Forschungszentrum Jülich GmbH**
**52425 Jülich (DE)**

(72) Erfinder:
• **GUILLON, Olivier**
**52428 Jülich (DE)**
• **RUBAT DU MERAC, Marc**
**64342 Seeheim-Jugenheim (DE)**
• **BRAM, Martin**
**52428 Jülich (DE)**

(56) Entgegenhaltungen:
EP-A2- 2 778 252      WO-A2-2009/038674
US-A- 5 702 654       US-A1- 2013 078 398

• DATABASE WPI Week 201614 Thomson Scientific, London, GB; AN 2015-726214 XP002774001, -& CN 105 016 776 A (SHANGHAI INST CERAMICS CHINESE ACAD SCI) 4. November 2015 (2015-11-04)

**Beschreibung**

Die Erfindung bezieht sich auf das Gebiet der Keramik und betrifft transparente Komposit-Bauteile, die eine erhöhte Bruchzähigkeit aufweisen. Insbesondere betrifft die Erfindung ein neues Verfahren, um polykristalline transparente Keramiken zu verstärken und zu verfestigen, sowie den Brechungsindex und die Reflexion gezielt zu beeinflussen.

Stand der Technik

Aus der Literatur sind zahlreiche transparente Komponenten mit nahezu dickenunabhängig hoher Lichttransmission für ultraviolette, sichtbare und infrarote Wellenlängen bekannt.

Bei kubischen Mg-Al-Spinellen kann beispielsweise eine klare Durchsichtigkeit von Bauteilen mit Dicken im cm-Bereich realisiert werden, sofern die Restporosität auf unter ein Hundertstel reduziert werden kann. Dazu wird in der Regel ein Sinterschritt bei hohen Temperaturen oberhalb von 1500 °C durchgeführt, was aber aufgrund des Kornwachstums nachteilig zu einer verminderten Belastbarkeit führen kann.

Neuere Untersuchungen zeigen, dass neue feinkristalline Spinell-Keramiken diesen Nachteil vermeiden können. Diese Spinell-Keramiken weisen eine geringe Abhängigkeit der Transmission von der Schichtdicke und eine hohe Transmission über einen weiten Wellenlängenbereich von UV bis IR ($\lambda$ = 2·10$^{-7}$ - 6·10$^{-6}$ m). Zudem weisen sie aufgrund ihrer kleinen Korngrößen bis < 1 $\mu$m eine hohe Härte (HV10 = 1450 - 1500) auf [1].

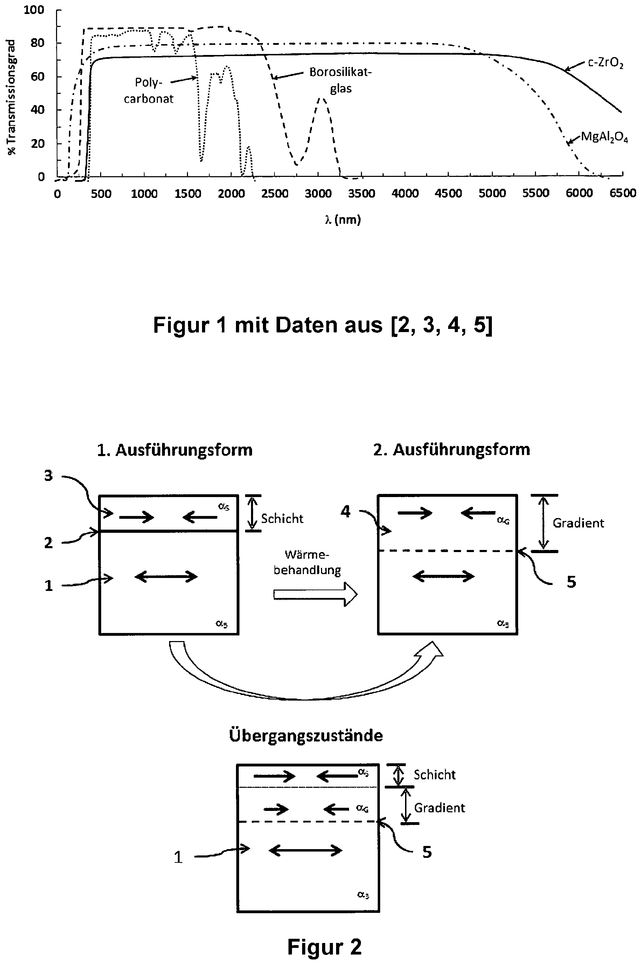

Eine Übersicht der Abhängigkeit der Transmission von der Wellenlänge für unterschiedliche Materialien ist in Figur 1 dargestellt. Dabei wurden die aus der Literatur erhältlichen Daten für PC [2] und Borosilikat [3] zusammen mit denen von kubischem c-ZrO$_2$ [4] und MagAl$_2$O$_4$ [5] in einem Diagramm abgebildet.

Für den Einsatz als Schutzschichten sind an solche transparente Keramiken hohe Anforderungen zu stellen. Dabei zählt insbesondere eine hohe Härte neben einem hohen Elastizitätsmodul zu den wichtigsten Voraussetzungen für eine hohe Schutzwirkung.

Die Härte von dichtgesinterten polykristallinen Keramiken kann sowohl größer als auch geringer sein als die von entsprechenden Einkristallen, höher insbesondere dann, wenn ein feinkörniges Gefüge vorliegt.

Der Bruchwiderstand von transparenten Keramiken ist dabei in der Regel deutlich geringer als die vorhergesagten theoretischen Werte, so dass transparente Keramiken auf Grund ihrer derzeitigen höheren Fabrikationskosten nur in speziellen Anwendungsfällen mit Gläsern oder Einkristallen konkurrieren.

Dass durch das Einbringen von Druckspannungen in die Oberfläche von Bauteilen eine Verfestigung bzw. eine Verstärkung erfolgen kann, wurde bereits früher für Metalle, Legierungen, Gläser und nicht transparente Keramiken beschrieben.

Aus dem Stand der Technik ist beispielsweise bekannt, dass eine Verfestigung bzw. eine Verstärkung von nicht transparenten Keramiken durch die Herstellung von Schichtverbundwerkstoffen erfolgen kann. Dabei werden zum einen unterschiedliche Keramiken eingesetzt, die jeweils unterschiedliche thermische Ausdehnungskoeffizienten aufweisen. Zum anderen bewirkt auch eine Dotierung mit Kationen z. B. durch Ionenimplantation, die einen größeren Atomradius als die Kationen des Grundgefüges aufweisen, die Ausbildung eine Druckspannung an der Oberfläche.

Die bislang bekannten Verfahren, um nichttransparente Keramiken durch das Einbringen von Druckspannungen in die Oberfläche zu verstärken, sind nicht ohne Weiteres auf transparente Keramiken übertragbar, da die nichttransparenten Keramiken nicht dieselben Anforderungen an die Lichtdurchlässigkeit stellen, wie nachfolgend dargestellt:

- Die Grenzflächen zwischen transparenten Keramiken mit unterschiedlichen Brechungsindizes müssen plan und senkrecht zum Lichteinfall ausgerichtet sein.
- Bereiche mit unterschiedlichen Brechungsindizes, Risse oder Poren dürfen nur in weniger als 0,01 Vol.-% des Materials vorhanden sein.
- Die Eigenspannung von transparenten Keramiken muss homogen in einer Ebene senkrecht zum einfallenden Licht ausgerichtet sein, ebenso wie Spannungsgradienten senkrecht zum einfallenden Licht ausgerichtet sein müssen.
- Die Kristallstruktur muss sich unverändert bis zur Grenzfläche erstrecken, insbesondere bei kubischen Strukturen.
- Die Korngrößen von polykristallinen doppelbrechenden transparenten Keramiken müssen unterhalb der zu erwartenden Wellenlängen des durchtretenden Lichtes liegen.
- Zudem dürfen die Eigenschaften einer transparenten Keramik in Bezug auf die Lichtdurchlässigkeit während der Herstellung der Keramik nicht verändert werden.

So wird in DE 10 2011 080 378 A1 beispielsweise eine transparente Komposit-Scheibe für Sicherheitsanwendungen beschrieben, die die bisherigen Nachteile in Bezug auf die Transmission und Qualität transparenter polykristalliner Keramiken ebenso vermeidet wie die eingeschränkte Schutzwirkung, wie sie Al$_2$O$_3$-Einkristalle im Vergleich zu feinkristallinen transparenten Al$_2$O$_3$- oder Spinell-Sinterkeramiken zeigen. Dazu wird eine transparente Komposit-Scheibe bereitgestellt, bei der der Komposit aus mehreren Lagen besteht, die hintereinander angeordnet sind, und von denen mindestens eine Lage aus einer oder mehreren mosaik- oder serienmäßig angeordneten Platten aus einkristallinem Magnesium-Aluminat-Spinell besteht.

Ferner ist aus DE 10 2004 004 259 B3 eine transparente polykristalline Sinterkeramik mit kubischer Kristallstruktur aus Mg-Al-Spinell, Al-Oxynitrid, $ZrO_2$ oder Y-Al-Granat oder einem Mischgefüge aus diesen Komponenten bekannt, welche mit einer mittleren Korngröße D im Bereich 60 nm < D < 10 $\mu$m eine Vickers-Härte HV10 > 13 GPa aufweist.

Aus CN 105 016 776 A (Zusammenfassung und CN Veröffentlichung) ist ein Verfahren zur Herstellung einer transparenten, polykristallinen Keramik (AION) bekannt, bei dem durch eine thermische Behandlung in einer Mg-haltigen Pulverschicht durch eine Infiltration ein oberflächennaher Bereich mit einem anderen thermischen Ausdehnungskoeffizienten bzw. einer Druckspannung erzeugt wird.

In US 2013/0078398 A1 wird ein Verfahren beschrieben, bei dem ein mehrschichtiges Keramikgehäuse hergestellt wird. Dieses weist eine innere Schicht und Oberflächenschichten auf, wobei die innere Schicht die Oberflächenschichten miteinander verbindet. Das mehrschichtige keramische Laminat weist eine erhöhter Querfestigkeit durch die Oberflächenschichten auf, da diese Oberflächenschichten einen thermischen Ausdehnungskoeffizienten (CTE) aufweisen, der geringer ist als der der inneren Schicht. Die unterschiedlichen thermischen Ausdehnungskoeffizienten erzeugen eine Druckspannung.

Aus WO 2009/038674 A2 ist ein Verfahren zur Herstellung einer transparenten Keramik bekannt, bei dem die transparente polykristalline Keramik (YAG) als Laminat aus YAG-Schichten mit unterschiedlichen Dotierungsgraden hergestellt wird.

Sowohl EP 2778252 A2 als auch US 5,702,264 offenbaren zudem Verfahren zur Herstellung einer transparenten einkristallinen Saphirscheibe, wobei mittels einer Beschichtung ein Bereich mit einer Druckspannung zur Verbesserung der Bruchfestigkeit erzeugt wird.

## Aufgabe und Lösung

Die Aufgabe der Erfindung ist es, weitere transparente polykristalline Sinterkeramiken mit einer gegenüber dem Stand der Technik verbesserten Bruchzähigkeit bereitzustellen.

Ferner ist es die Aufgabe der Erfindung, ein entsprechendes Herstellungsverfahren für diese verbesserten transparenten polykristallinen Keramiken anzugeben.

Die Aufgaben der Erfindung werden gelöst durch ein Verfahren zur Herstellung einer transparenten polykristallinen Keramik mit den Merkmalen des Hauptanspruchs sowie durch eine transparente polykristalline Keramik mit den Merkmalen gemäß Nebenanspruch.

Vorteilhafte Ausgestaltungen des Verfahrens und der Keramik ergeben sich aus den jeweils darauf rückbezogenen Ansprüchen.

## Gegenstand der Erfindung

Im Rahmen der Erfindung wurde herausgefunden, dass über die Ausbildung von Druckspannungen im oberflächennahen Bereich einer transparenten polykristallinen Keramik diese deutlich verstärkt und insbesondere die Bruchzähigkeit verbessert werden kann.

Im Rahmen der Erfindung wird unter dem Begriff "transparent" oder "Transparenz" eine klare

Durchsichtigkeit verstanden, wie sie z. B. für Fensterglas im Bereich des sichtbaren Lichts gegeben ist. Damit grenzt sich transparent ab gegenüber transluzent, welches eine durchscheinende Eigenschaft und damit eine partielle Lichtdurchlässigkeit charakterisiert. Ein typisches Beispiel aus dem täglichen Alltag ist Milchglas.

Die Bruchkraft ist ein in der Werkstoffprüfung verwendeter Begriff für die Kraft, die benötigt wird, um einen Prüfkörper unter gleichmäßiger Steigerung der Belastung zu brechen oder zu zerreißen. Die Bruchkraft wird meist als Kraft (in N) oder als auf den Bauteilquerschnitt bezogene Bruchspannung bzw. Bruchzähigkeit (in $N/mm^2$) angegeben.

Die Festigkeit kann je nach Art der Krafteinleitung weiter in Zugfestigkeit, Druckfestigkeit, Biegezugfestigkeit, Scherfestigkeit oder Torsionsfestigkeit unterschieden werden. Die Festigkeit ist eine materialabhängige Größe und hängt insbesondere auch von der Temperatur ab. Spröde Materialien brechen in der Regel nach einer rein elastischen Verformung ohne plastische Anteile und besitzen so eine geringe Bruchdehnung. Die Festigkeit wird durch die Bindungskräfte im Kristallgitter sowie durch Defekte und Unregelmäßigkeiten im Gefüge (z. B. Korngrenzen, Poren, Fremdatome oder Fremdphasen) als auch durch Defekte an der Oberfläche (z. B. Rauigkeiten oder Kratzer) bestimmt. Je nach Art der Defekte kann sich die Festigkeit entweder erhöhen oder verringern.

Die Bruchzähigkeit beschreibt demgegenüber den Widerstand eines Materials gegen instabilen Rissfortschritt. Der Werkstoffkennwert ist der kritische Spannungsintensitätsfaktor $K_{Ic}$, bei dem der instabile Rissfortschritt einsetzt.

Die Erfindung stellt ein Verfahren bereit, mit dem vorteilhaft die Bruchzähigkeit einer polykristallinen transparenten Keramik verbessert werden kann. Die Erfindung stellt insofern auch polykristalline transparente Keramiken mit einer verbesserten Bruchzähigkeit bereit.

Überprüft werden können diese Verbesserungen insbesondere durch eine Messung, die ähnlich wie eine Härteprüfung abläuft. Bei einer Härteprüfung wird der Widerstand eines Prüfkörpers gegen das Eindringen eines anderen, härteren Körpers gemessen. Die Härte eines Körpers hängt dabei insbesondere vom Gefüge ab, das in dem Körper vorliegt. Einfluss nehmen dabei die Art des Kristallgitters und auch die Art des Processings bei der Herstellung des Körpers.

Zur Härteprüfung wird beispielsweise das Verfahren nach Vickers eingesetzt. Dabei wird ein Eindringkörper in Form einer geraden Pyramide mit einer Prüfkraft F [in N] senkrecht in die Oberfläche des Prüfkörpers eingedrückt. Die Grundfläche der Pyramide ist quadratisch, der Winkel zwischen den gegenüberliegenden Seiten beträgt 136°. Aus dem Mittelwert der Diagonalen des Prüfeindrucks lässt sich die Vickershärte berechnen.

Zur Überprüfung der Bruchzähigkeit kann ein analoges Verfahren angewendet werden. Allerdings werden dabei nicht nur die Prüfeindrücke der Diagonalen berücksichtigt, sondern auch die davon ausgehenden Risse vermessen. Ferner lassen sich durch die Wahl des Prüfkörpers unterschiedliche Eindrucktiefen erzielen, so dass sowohl Aussagen über eine oberflächennahe Beschichtung als auch über einen tieferliegenden Bereich getroffen werden können. Die hier vorgeschlagene Überprüfung der Bruchzähigkeit dient insbesondere Vergleichszwecken und ergibt in der Regel in Bezug auf die Bruchzähigkeit keine absoluten Messwerte.

Im Gegensatz dazu kann die Bruchzähigkeit spröder Keramiken aus der resultierenden Risslänge mit guter Genauigkeit über die Gleichung von Anstis et al. [6] abgeschätzt werden. Wird der Vickers-Prüfkörper bei der Härteprüfung mit der Kraft F in die Probe gedrückt, entsteht ein Prüfeindruck, der die Härte H des Materials dokumentiert. Bei spröden Materialien kommt es zusätzlich an den Ecken des Prüfeindrucks zur Ausbildung eines Risses der Länge c. Der für das Material charakteristische Spannungsintensitätsfaktor berechnet sich nach Anstis bei Kenntnis des E-Moduls des Materials zu:

$$K_{IC} = 0{,}016(E \, / \, H)^{1/2}\left(\frac{F}{c^{3/2}}\right)$$

Bekannte Materialien für transparente Keramiken sind insbesondere polykristallines Zirkoniumdioxid ($ZrO_2$), dessen kubische Phase durch Dotierungen mit z. B. Y, Sc, Mg Ce oder Ca stabilisiert wird, oder Korund ($\alpha$-$Al_2O_3$) bzw. die Spinell-Keramik ($MgAl_2O_4$). Weiterhin sind auch transparente Keramiken aus Al-Oxynitrid oder Granate auf Basis von Y und Al bekannt. Die Lichtdurchlässigkeit variiert dabei häufig mit der Größe des Gefüges, und zeigt bei Gefügegrößen > 20 $\mu$m häufig bereits eine nicht mehr klare Durchsichtigkeit. Die Dicke freitragender transparenter Keramiken liegt im Bereich von 100 $\mu$m bis mehrere cm, wobei mit zunehmender Schichtdicke die Lichtdurchlässigkeit in der Regel abnimmt. Weiterhin darf für die Sicherstellung der Transparenz die Anzahl der Defekte im Gefüge sowie an der Oberfläche einen kritischen Wert nicht überschreiten.

Die Erfindung schlägt vor, dass zur Stärkung und Erhöhung der Bruchzähigkeit einer polykristallinen transparenten Keramik in wenigstens einem oberflächennahen Bereich eine Druckspannung generiert wird. Dies kann erfindungsgemäß auf zweierlei Wegen erfolgen.

Dazu kann entweder auf der Oberfläche eines polykristallinen transparenten keramischen Körpers ein dazu kompatibler planer und ionisch oder kovalent gebundener, polykristalliner transparenter keramischer Oberflächenbereich angeordnet werden (1. Ausführungsform) oder innerhalb einer polykristallinen transparenten Keramik ein planer, oberflächennaher Bereich mit einem kontinuierlichen Gradienten (S) in Bezug auf den Gehalt des Dotierungselements bzw. der stöchiometrischen Zusammensetzung der Keramik erzeugt werden (2. Ausführungsform). Eine Übersicht der erfindungsgemäß bereitgestellten Lösungen zeigt schematisch die Figur 2.

In einer besonderen Ausgestaltung der Erfindung ist vorgesehen, dass zur Stärkung und Erhöhung der Bruchzähigkeit einer polykristallinen transparenten Keramik auf zwei gegenüberliegenden Seiten (Vorder- und Rückseite) in den oberflächennahen Bereichen jeweils eine Druckspannung generiert wird. Hier spricht man dann von einer Sandwich-Struktur.

Durch eine Wärmebehandlung bei Temperaturen oberhalb von 800°C kann die 1. Ausführungsform vorteilhaft in die 2. Ausführungsform überführt werden, wobei dabei beliebig viele Übergangszustände erzeugt werden können, die einerseits keine scharfe Grenzflächen mehr aufweisen, wie die 1. Ausführungsform, und bei denen anderseits der erzeugte Gradient noch nicht vollständig bis zur Oberfläche reicht, wie bei der 2. Ausführungsform.

Das bedeutet, dass durch die Wahl der Ausgangsmaterialien in Kombination mit einer angepassten Wärmebehandlung vorteilhaft der Gradient in der Übergangszone von der Oberfläche zum bulk-Bereich, beispielsweise der Gradient der Yttrium-Konzentration, exakt eingestellt werden kann, und damit auch die resultierende Druckspannung in diesem Bereich. Auf diese Weise lassen sich mit dem erfindungsgemäßen Verfahren Druckspannungen bis hin zu Werten erreichen, die vergleichbar sind mit denen von Ionenaustausch Gläsern. Gleichzeitig werden aber die optischen Eigenschaften der Keramik dadurch nicht nachteilig beeinflusst, da die Oberfläche regelmäßig optisch glatt, eben und porenfrei ist und kleine Sekundärphasen aufweist.

Gegenüber den aus dem Stand der Technik bekannten Beschichtungen mit den typischen, scharfen Übergängen hat sich die erfindungsgemäße Ausbildung eines kontinuierlichen Übergangs (Gradient) als besonders vorteilhaft für die Verbesserung der Haftung der Beschichtung herausgestellt. Zudem führt dies im Fall einer mechanischen Belastung und/oder harscher Temperaturzyklen regelmäßig zu einer deutlichen Vermeidung der Rissbildung an der Grenzfläche.

Aufgrund der unterschiedlichen thermischen Ausdehnungskoeffizienten zwischen dem bulk Material des polykristallinen transparenten keramischen ($\alpha_B$) und dem aufgebrachten polykristallinen transparenten keramischen Oberflächenbereich ($\alpha_S$) einerseits oder zwischen dem bulk-Material des polykristallinen transparenten keramischen Körpers ($\alpha_B$) und dem Bereich mit dem stöchiometrischen Gradienten ($\alpha_G$) andererseits können so vorteilhaft an der Oberfläche des Körpers bzw. in einem oberflächennahen Bereich Druckspannungen aufgebaut werden. Der Index S steht im Folgenden dabei für einen oberflächennahen Bereich, der Index B für bulk-Phase und der Index G für einen gradierten Bereich innerhalb der Keramik.

Die Druckspannungen entstehen beim Abkühlen von der Sintertemperatur bzw. der Wärmebehandlungstemperatur, da der bulk-Bereich dazu tendiert sich aufgrund des höheren Ausdehnungskoeffizienten stärker zusammenzuziehen. Diese Kontraktion wird jedoch durch die oberflächennahe Schicht mit kleinerem Ausdehnungskoeffizienten teilweise oder vollständig verhindert, wodurch im oberflächennahen Bereich Druckspannungen resultieren, sofern diese nicht durch Rissbildung oder Delamination abgebaut werden. Ein stufenloser Gradient des Ausdehnungskoeffizienten (2. Ausführungsform und Übergangszustände) ist von Vorteil, um einer Rissbildung bzw. Delamination entgegenzuwirken.

Die Erfindung betrifft insofern zur Herstellung einer polykristallinen transparenten Keramik gemäß der 1. Ausführungsform (siehe Figur 2) ein Verfahren zur Herstellung eines planen, ionisch oder kovalent gebundenen, polykristallinen transparenten keramischen Oberflächenbereichs 3 (Beschichtung) auf einem ebenfalls polykristallinen transparenten keramischen Körper 1. Der kompatible polykristalline transparente keramische Oberflächenbereich 3 weist dabei einen kleineren thermischen Ausdehnungskoeffizienten als der Körper 1 auf ($\alpha_S < \alpha_B$). Der polykristalline transparente keramische Körper 1 und der dazu kompatible polykristalline transparente keramische Oberflächenbereich 3 sind dabei über eine plane Grenzfläche 2 ionisch oder kovalent miteinander verbunden.

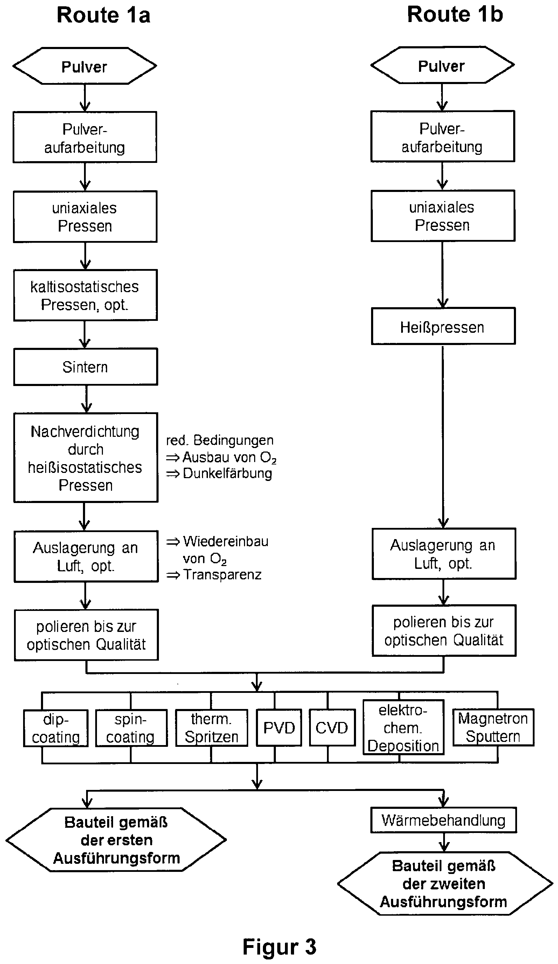

Die Herstellung einer polykristallinen transparenten Keramik gemäß der 1. Ausführung kann dabei über unterschiedliche Verfahrensrouten erfolgen, wovon zwei beispielhaft in der Figur 3 wiedergegeben sind.

Eine erste Verfahrensvariante (Route 1a) zur Erzeugung einer polykristallinen transparenten Keramik sieht beispielsweise vor, dass aus einem entsprechenden keramischen Ausgangspulver, ggfs. nach einer Pulveraufarbeitung, über uniaxiales Pressen ein keramischer Grünkörper erzeugt wird. Optional kann der Grünkörper auch noch kaltisostatisch verpresst werden, wodurch die Homogenität der Dichteverteilung im Grünkörper erhöht wird. Der Grünkörper wird im Anschluss drucklos an Luft gesintert. Dabei weist der gesinterte Grünkörper in der Regel eine Dichte von ca. 95 % der theoretischen Dichte auf, so dass der überwiegende Teil der Poren als geschlossene Porosität vorliegt und somit keine Verbindung zur Bauteiloberfläche mehr aufweist.

Es folgt eine Nachverdichtung der geschlossenen Poren im gesinterten Körper durch heißisostatisches Pressen, das in der Regel unter Schutzgas (z. B. Ar) als Druckübertragungsmedium durchgeführt wird. Das Schutzgas besitzt in der Regel einen Sauerstoffpartialdruck deutlich unterhalb von 0,2 bar, so dass der HIP-Prozess für Oxidkeramiken reduzierende Bedingungen aufweist.

Wird hierbei aufgrund der reduzierenden Bedingungen Sauerstoff aus dem Kristallgitter ausgebaut, kommt es in der Regel zu einer Verfärbung des Bauteils, insbesondere einer Schwarzfärbung, die mit einer Verringerung der Transparenz einhergeht. Um diesen Effekt rückgängig zu machen, kann optional im Anschluss an den HIP-Prozess eine Auslagerung in einer sauerstoffhaltigen Atmosphäre erfolgen, wodurch der keramische Körper durch Reoxidation, d. h. durch Wiedereinbau von Sauerstoff in das Kristallgitter, wieder transparent wird.

Vor einer weiteren Behandlung, d. h. insbesondere vor einer funktionalen Beschichtung, wird das Bauteil auf der zur Beschichtung vorgesehenen Oberfläche bis zur optischen Qualität poliert.

Eine zweite Verfahrensvariante (Route 1b) zur Erzeugung einer polykristallinen transparenten Keramik sieht beispielsweise vor, dass ein entsprechendes keramisches Ausgangspulver, ggfs. nach einer Pulveraufarbeitung, über Heißpressen zu einem keramischen Körper geformt wird. Optional kann vor diesem Schritt auch noch zusätzlich ein uniaxiales Verpressen erfolgen.

Der polykristalline transparente keramische Körper wird im Anschluss daran in einer sauerstoffhaltigen Atmosphäre ausgelagert.

Vor einer weiteren Behandlung, d. h. insbesondere vor einer funktionalen Beschichtung, wird der polykristalline transparente keramische Körper auf der zur Beschichtung vorgesehenen Oberfläche bis zur optischen Qualität poliert.

Die Herstellung eines planen, ionisch oder kovalent gebunden, polykristallinen transparenten keramischen Oberflächenbereichs (funktionale Beschichtung) auf einem zuvor erzeugten polykristallinen transparenten keramischen Körper, insbesondere hergestellt nach Route 1a oder 1b, erfolgt dann über herkömmliche Aufbringungsmethoden, wie beispielsweise Tauchbeschichtung (dip-coating) mit anschließender Sinterung bei moderaten Temperaturen unterhalb von 1000 °C, Rotationsbeschichtung (spin-coating) mit anschließender Sinterung bei moderaten Temperaturen oder thermisches Spritzen. Besonders vorteilhafte Verfahren sind auch die physikalische Gasphasenabscheidung (PVD), die chemische Gasphasenabscheidung (CVD), die elektrochemische Deposition oder Magnetron Sputtern.

Als Material für die funktionale Beschichtung ist $Y_2O_3$ für YSZ-Keramiken (YSZ = mit $Y_2O_3$ dotiertes $ZrO_2$) geeignet. Wichtig ist, dass das Material für den polykristallinen transparenten keramischen Oberflächenbereich 3 so gewählt wird, dass dessen thermischer Ausdehnungskoeffizient kleiner als der des keramische Körpers 1 ist ($\alpha_S < \alpha_B$), so dass sich nach der Abkühlung von der Beschichtungstemperatur eine Druckspannung im oberflächennahen Bereich der Keramik ausbildet.

Direkt nach der Beschichtung liegt in der Regel eine transparente Keramik der 1. Ausführungsform vor. Diese kann für YSZ-Keramiken durch eine Wärmebehandlung bei Temperaturen oberhalb von 1400°C in Abhängigkeit von der Haltezeit in die 2. Ausführungsform bzw. bei entsprechend kürzeren Haltezeiten in Übergangszustände gemäß Figur 2 überführt werden.

Die auf die Oberfläche des polykristallinen transparenten keramischen Körpers 1 aufgebrachte kompatible transparente keramische Oberflächenschicht 3 weist vorzugsweise eine Schichtdicke von weniger als 5 $\mu$m, insbesondere von weniger als 1,5 $\mu$m auf. Die aufgebrachte Schicht sollte jedoch eine minimale Schichtdicke von 0,1 $\mu$m aufweisen.

Der aufgebrachte transparente keramische Oberflächenbereich 3 weist ferner eine homogene keramische Kristallstruktur auf. Aufgrund der Kompatibilität zwischen dem keramischen Köper 1 und der funktionalen Beschichtung 3 wird zudem vorteilhaft die Ausbildung von Sekundärphasen mit Poren und/oder unterschiedlichen Brechungsindizes verhindert.

Damit behält der aufgebrachte kompatible polykristalline transparente keramische Oberflächenbereich 3 die bulk-Eigenschaften der Keramik des keramischen Körpers 1 bezüglich des Durchlassverhaltens vorteilhaft auch in dem Oberflächenbereich bei.

Auf diese Weise kann eine erfindungsgemäße polykristalline transparente Keramik gemäß der 1. Ausführungsform hergestellt werden, welche zudem vorteilhaft durch eine Wärmebehandlung über verschiedene Übergangszustände leicht in die 2. Ausführungsform der Erfindung überführt werden kann.

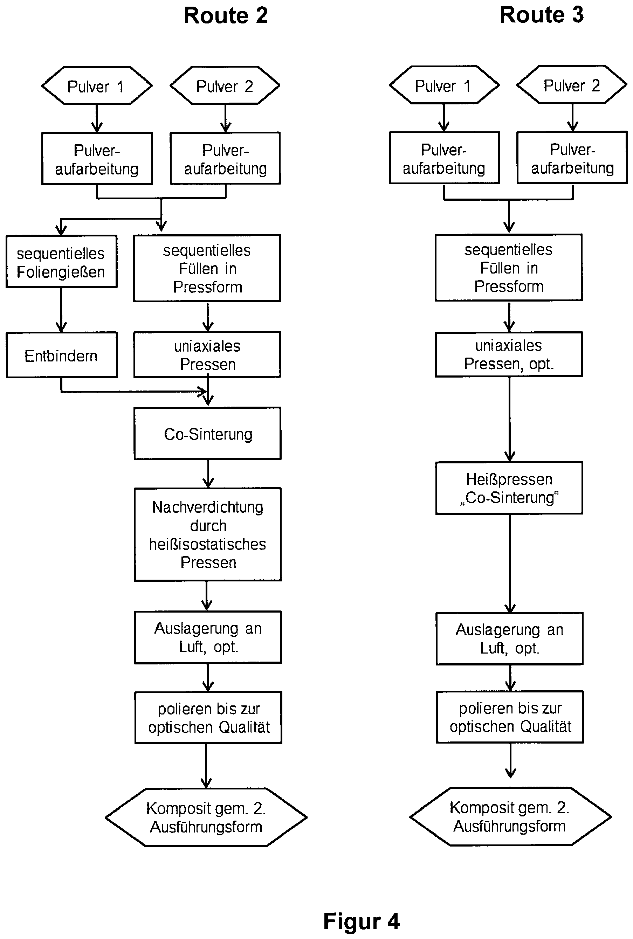

Eine Alternative zu den vorgenannten Verfahren zur Erzeugung einer erfindungsgemäßen polykristallinen transparenten Keramik gemäß der 2. Ausführungsform sieht vor, dass die Keramik direkt aus den entsprechenden Ausgangspulvern für den keramischen Körper und für die funktionale Beschichtung hergestellt und diese zusammen gesintert bzw. verpresst werden. Dabei weist das Material für die funktionale Beschichtung einen geringeren thermischen Ausdehnungskoeffizienten auf, als das Material für den keramischen Körper. Dazu sind ebenfalls beispielhaft zwei weitere Verfahrensrouten 2 und 3 in der Figur 4 schematisch dargestellt.

Durch die dabei vorgenommene Wärmebehandlung erfolgt gleichzeitig die Ausbildung eines Bereichs mit einer gradierten Stöchiometrie, die je nach Dauer der Temperaturbehandlung vollständig zur 2. Ausführungsform führt, oder aber zu einer der vorgenannten Übergangszustände, bei denen einerseits noch eine oberflächennahe Schicht aus dem Beschichtungsmaterial vorliegt, sich anderseits aber auch ein Bereich mit einem Gradienten des Dotierungselements bzw. einer kontinuierlichen Änderung der Stöchiometrie der Keramik ausgebildet hat.

Eine Verfahrensvariante (Route 2) zur Erzeugung einer polykristallinen transparenten Keramik sieht beispielsweise vor, dass entsprechende keramische Ausgangspulver für den keramischen Körper und den oberflächennahen Bereich, ggfs. nach einer Pulveraufarbeitung, über sequentielles Füllen in eine Pressform gegeben und dort zunächst uniaxial verpresst werden. Optional kann ein kaltisostatischer Pressschritt erfolgen. Das Füllen der Pressform mit den Pulvern erfolgt dabei derart, dass zwischen den beiden unterschiedlichen Pulvern eine plane Grenzfläche geschaffen wird.

Als hierfür geeignete Materialien sind prinzipiell dieselben zu nennen, die auch bei den Verfahrensvarianten der Routen 1a und 1b für den keramischen Körper und die funktionale Beschichtung eingesetzt werden können. Wichtig ist, dass für den oberflächennahen Bereich das Material so gewählt wird, dass dessen thermischer Ausdehnungskoeffizient kleiner als der des übrigen keramische Körpers, so dass sich nach einer Wärmebehandlung eine Druckspannung im oberflächennahen Bereich der Keramik ausbildet.

Alternativ zur sequentiellen Füllung einer Pressform kann auch ein sequentielles Foliengießen mit den beiden oder ggfs. mehreren entsprechenden keramischen Ausgangspulvern mit einer anschließenden Entbinderung vorgesehen werden.

Das somit 2-lagig pulverförmig vorliegende Komposit wird anschließend einer gleichzeitigen Sinterung beider Schichten, einer sog. Co-Sinterung, unterzogen, wodurch eine Dichte von ca. 95 % der theoretischen Dichte erzielt wird.

Zum Erreichen der Transparenz folgt eine Nachverdichtung des Co-gesinterten Komposits durch heißisostatisches Pressen unter reduzierenden Bedingungen.

Sofern hierbei Sauerstoff aus der polykristallinen transparenten Keramik ausgebaut wird und damit eine Verfärbung der Keramik, insbesondere eine Schwarzfärbung, einhergeht, kann optional im Anschluss daran eine Auslagerung in einer sauerstoffhaltigen Atmosphäre erfolgen, wodurch die polykristalline Keramik wieder transparent wird.

Die stirnseitigen Oberflächen des Komposits werden bis zur optischen Qualität poliert, um Oberflächenrauigkeiten und Kratzer zu entfernen, die die Transparenz und die Bruchzähigkeit einschränken.

Eine weitere Verfahrensvariante (Route 3) zur Erzeugung einer polykristallinen transparenten Keramik sieht beispielsweise vor, dass entsprechende keramische Ausgangspulver für den keramischen Körper und den oberflächennahen Bereich, ggfs. nach einer Pulveraufarbeitung, über sequentielles Füllen in eine Pressform gegeben werden, wobei auch hier zwischen den beiden unterschiedlichen Pulvern eine plane Grenzfläche geschaffen wird.

Optional kann diese Pulverschüttung uniaxial vorverdichtet werden.

Es folgt eine Verdichtung der sequentiell eingefüllten Pulver durch Heißpressen, das in einem Schritt durchgeführt wird. Hierbei wird während der Sinterung über ein Stempelsystem ein uniaxialer Druck auf die Pulver aufgebracht, so dass eine vollständige Verdichtung des keramischen Körpers und des oberflächennahen Bereichs erreicht wird. Eine heißisostatische Nachverdichtung ist in diesem Fall nicht notwendig, da die vollständige Verdichtung bereits nach dem Heißpressen erreicht wird.

Auch das Heißpressen wird in der Regel in Schutzgas (z. B. Argon) oder im Vakuum durchgeführt, so dass ähnlich wie beim Heißisostatischen Pressen für Oxidkeramiken reduzierende Bedingungen vorliegt. Weiterhin kann auch das üblicherweise eingesetzte Stempelmaterial, Graphit, einen Ausbau von Sauerstoff aus der Oxidkeramik bewirken, da sich an der Kontaktfläche $CO_2$ bilden kann. Entsprechend kommt es in der Regel dazu, dass Sauerstoff aus dem Gefüge ausgebaut und ggfs. eine Verfärbung einhergeht. Um diesen Effekt rückgängig zu machen, kann optional im Anschluss daran wieder eine Auslagerung in einer sauerstoffhaltigen Atmosphäre erfolgen, wodurch die polykristalline Keramik wieder transparent wird.

Auch in diesem Fall werden die Oberflächen (s. o.) bis zur optischen Qualität poliert.

Die beiden unterschiedlichen Materialien des keramischen Körpers und der funktionalen Beschichtung sollten so gewählt werden, dass sich während des Herstellungsprozesses der polykristallinen transparenten Keramik und der polykristallinen transparenten Beschichtung an der Grenzfläche vorzugsweise keine Sekundärphasen ausbilden, die einen unterschiedlichen Brechungsindex aufweisen. Für die geeignete Auswahl der Materialkombination sind Stoffsysteme zu bevorzugen, die im entsprechenden Phasendiagramm eine lückenlose Mischbarkeit aufweisen. Entsprechend sollten im Phasendiagramm dann auch keine Sekundärphasen enthalten sein. Für den Fall, dass gemäß dem Phasendiagramm doch Sekundärphasen ausgebildet werden können, hat dies für die erfindungsgemäße Herstellung keine nachteiligen Folgen, solange die Bildung dieser Sekundärphasen so langsam erfolgt, dass die Zeitspanne der thermischen Behandlung während der Herstellung der Keramik regelmäßig nicht ausreicht, um die Sekundärphasen auszubilden.

Bei den Herstellungsverfahren über Ausgangspulver, z. B. über die Routen 2 oder 3, können ggfs. auch mehr als zwei verschiedene keramische Materialien eingesetzt werden. So könnte beispielsweise in eine Pressform auf eine erste Schüttung umfassend 8-YSZ (mit 8 mol-% $Y_2O_3$ dotiertes $ZrO_2$) eine zweite Schicht umfassend 10-YSZ (mit 10 mol-% $Y_2O_3$ dotiertes $ZrO_2$) und zum Schluss eine weitere Schicht umfassend 12-YSZ (mit 12 mol-% $Y_2O_3$ dotiertes $ZrO_2$) gegeben werden. Da sich der thermische Ausdehnungskoeffizient von Zirkoniumdioxid mit steigendem Anteil an $Y_2O_3$ verringert, lägen auch hier ein oberflächennaher Bereich umfassend 12-YSZ vor, der einen kleineren thermischen Ausdehnungskoeffizienten als die darunter liegende Schicht, hier 10-YSZ, aufweist, die wiederum einen kleineren thermischen Ausdehnungskoeffizienten als die zuunterst liegende Schicht, hier 8-YSZ, aufweist. Bei einer ausreichend langen Wärmebehandlung erfolgt in der Regel ein diffusiver Austausch von $Y^{3+}$-Ionen, die aus den oberflächennahen Bereichen in Richtung auf das niedriger dotierte YSZ wandern, während $Zr^{4+}$-Ionen aus den niedriger dotierten Bereichen in Richtung Oberfläche wandern. Auf diese Weise bildet sich in Richtung auf die Oberfläche ein stufenloser gradierter YSZ-Bereich mit steigendem Anteil an $Y_2O_3$ aus. Der Anteil an $ZrO_2$ nimmt in der Beschichtung von der Grenzfläche zur Oberfläche hin ab. Sofern eine kürzere Wärmebehandlung erfolgt, ergeben sich insofern kontinuierliche Übergangszustände von der anfangs dreischichtigen Zusammensetzung der Keramik bis hin zu einer Keramik mit mehr oder weniger gradierten Bereichen.

Es hat sich herausgestellt, dass mit dem erfindungsgemäßen Verfahren sehr dichte Beschichtungen mit einer glatten, ebenen Grenzfläche erzeugt werden können, wobei sich eine ungeordnete Grenzschicht ohne Ausbildung von Sekundärphasen und mit einer sehr dünnen Schichtdicke von vorzugsweise < 1 nm ausbildet. Mit dem erfindungsgemäßen Verfahren können Druckspannungen im Oberflächen nahen Bereich von bis zu 750 MPa erzeugt, werden, die vergleichbar sind mit solchen von Ionenaustausch verstärkten Gläsern (> 900 MPa - Schott Xensation®, > 850 MPa - Corning Gorilla®). Die Einkerbungsabdrücke sind in den erfindungsgemäßen Beschichtungen regelmäßig kürzer, insbesondere nach einer Wärmebehandlung. Durch eine steigende Temperaturerhöhung (Wärmebehandlung) wird gleichzeitig die Druckeigenspannung verringert und die Bruchfestigkeit signifikant erhöht, was auf die Counterdiffusion der Kationen, z. B. $Y^{3+}$ oder $Zr^{4+}$, zurückzuführen ist, die regelmäßig zu einem dickeren, verdichteten Bereich führen. Zudem kann beispielsweise durch eine erfindungsgemäße Beschichtung mit Yttrium vorteilhaft die Transmission erhöht und die Reflektion verringert werden.

Spezieller Beschreibungsteil

Im Weiteren wird die Erfindung anhand von drei Ausführungsbeispielen und einigen Figuren näher erläutert, ohne dass dies zu einer Einschränkung des Schutzumfanges führen soll.

Dabei zeigen:

Figur 1:   Darstellung der Transparenz von verschiedenen Werkstoffen im Wellenlängenbereich von > 0 bis 6500 nm mit Daten aus [2, 3, 4 und 5].

Figur 2:   Schematische Darstellung der erfindungsgemäßen polykristallinen transparenten Keramiken mit entsprechenden Druckspannungen im oberflächennahen Bereich.

Figur 3:   Mögliche Verfahrensschritte zur Herstellung einer polykristallinen transparenten Keramiken gemäß der 1. Ausführungsform und ggfs. der 2. Ausführungsform (Routen 1a und 1b).

Figur 4:   Mögliche Verfahrensschritte zur Herstellung einer polykristallinen transparenten Keramik gemäß der 2. Ausführungsform (Routen 2 und 3).

Figur 5:   Schematischer Verfahrensablauf zur Herstellung der polykristallinen transparenten bulk-Keramik mit den Prozessparametern Druck und Temperatur.

Figur 6:   Darstellung der thermischen Ausdehnungskoeffizienten von unterschiedlich dotiertem YSZ aus [7].

Figur 7:   Rasterelektronenmikroskopische Aufnahme einer dünnen planen $Y_2O_3$-Beschichtung, die mittels EB-PVD auf einem transparenten Bauteil, umfassend 8-YSZ, aufgebracht wurde.

Figur 8:   Prüfeindrücke auf der Oberfläche

(a) eines unbeschichteten, transparenten 8-YSZ-Bauteils und

(b) eines mit $Y_2O_3$ mittels EB-PVD beschichteten 8-YSZ-Bauteils, nach einer thermischen Behandlung.

Der Bruchwiderstand konnte für das erfindungsgemäß beschichtete Bauteil um ca. 30 % erhöht werden.

1. Ausführungsbeispiel für die Herstellung einer polykristallinen transparenten Keramik gemäß der 2. Ausführungsform der Erfindung

Ein poliertes, transparentes, keramisches Bauteil, umfassend mit 8 mol-% $Y_2O_3$ dotiertes $ZrO_2$ (8-YSZ), herstellbar nach einer der Routen 1a oder 1b, wird mit einer dünnen Schicht, umfassend Yttriumoxid ($Y_2O_3$) beschichtet. Alternativ kann als Substratmaterial auch 10-YSZ (mit 10 mol-% $Y_2O_3$ dotiertes $ZrO_2$) eingesetzt werden. Die Schichtdicke beträgt ca. 750 nm. Die Beschichtung erfolgt mittels EB-PVD (Electron Beam-Physical Vapour Deposition)-Technologie.

Die nachfolgende Tabelle 1 führt die dabei eingestellten Verfahrensparameter der Herstellung der der $Y_2O_3$-Schicht mittels EB-PVD auf. Tabelle 1:

| Targetmaterial | $Y_2O_3$ |
|---|---|
| Substratmaterial (keramischer Körper), hergestellt gemäß Figur 5 | 8-YSZ bzw. 10-YSZ |
| Sputtertemperatur | 750 °C |
| Schichtdicken der funktionalen Beschichtung | 0,75 $\mu$m, 1,5 $\mu$m |
| Wärmebehandlung zur definierten Einstellung des gradierten Übergangs zwischen der bulk-Keramik und der EB-PVD Beschichtung | 1, 3, 6 und 12 Stunden ca. 1450 °C unter Luft |

Das so erhaltene transparente keramische Komposit wird für wenigstens 1 Stunde erhitzt. Das Erhitzen sollte aber nicht länger als 24 Stunden erfolgen, um sowohl einen vollständigen Konzentrationsausgleich in Bezug auf den $Y_2O_3$-Gehalt zwischen der bulk-Keramik und der Beschichtung als auch ein Grobkornwachstum der bulk-Keramik und der Beschichtung zu vermeiden. Beide Effekte sind mit einer unerwünschten Verringerung der Bruchzähigkeit verbunden. Das Aufheizen erfolgt bis zu Temperaturen oberhalb von 1200 °C, besonders vorteilhaft bis 1450 °C. Im Anschluss wird das Komposit schnell abgekühlt. Eine schnelle Abkühlung kann vorteilhaft durch Herausnehmen aus einem Ofen und Abkühlung bei Raumtemperatur erfolgen. Eine schnelle Abkühlung kann aber auch durch Eintauchen in eine Flüssigkeit erfolgen (sog. Abschrecken).

Im Fall einer mit $Y_2O_3$ beschichteten YSZ-Keramik führt eine solche thermische Behandlung beispielsweise

dazu, dass die $Y^{3+}$-Ionen aus der funktionalen Beschichtung in das YSZ der Keramik und $Zr^{4+}$-Ionen aus der Keramik in die Yttrium-Beschichtung diffundieren und so in Richtung auf die Oberfläche des Komposits einen Bereich mit einer stufenlosen Zunahme des $Y_2O_3$-Gehalts in der YSZ-Keramik ausbilden. Der Anteil an $ZrO_2$ nimmt in der Beschichtung von der Grenzfläche zur Oberfläche hin ab, so dass an der Oberfläche selbst vorteilhaft noch reines $Y_2O_3$ erhalten bleibt. Hierfür muss die Dauer der Wärmebehandlung entsprechend kurz gewählt wird.

Eine YSZ-Keramik mit einem höherer $Y_2O_3$ Anteil weist einen geringeren thermischen Ausdehnungskoeffizienten auf, als eine YSZ-Keramik mit einem geringeren $Y_2O_3$ Anteil. Dadurch wird in dem gradierten YSZ-Bereich an der Oberfläche nach einer entsprechenden Temperaturbehandlung eine Druckspannung aufgebaut. Diese wird in der Regel durch eine Zugspannung im Inneren des Bauteils ausgeglichen.

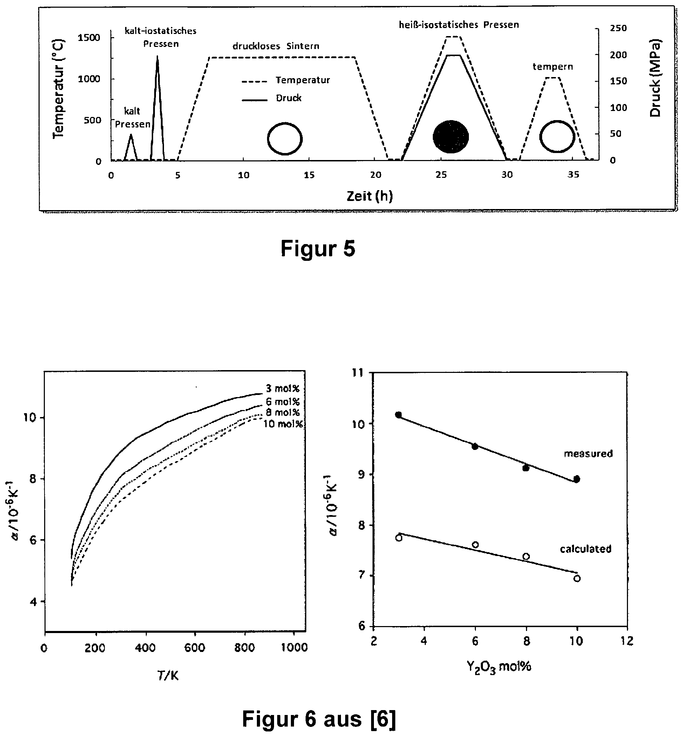

In der Figur 6 aus [7] sind die thermischen Ausdehnungskoeffizienten $\alpha$ von mit Yttriumoxid stabilisiertem Zirkoniumdioxid (YSZ) mit unterschiedlichen Molanteilen an $Y_2O_3$ (von 3 mol-% bis 10 mol-%) dargestellt. Je größer der Anteil an $Y_2O_3$ im YSZ desto geringer ist der thermische Ausdehnungskoeffizient. Reines $Y_2O_3$ weist einen noch geringeren Ausdehnungskoeffizienten auf (Werte unter $8 \cdot 10^{-6}$ $K^{-1}$).

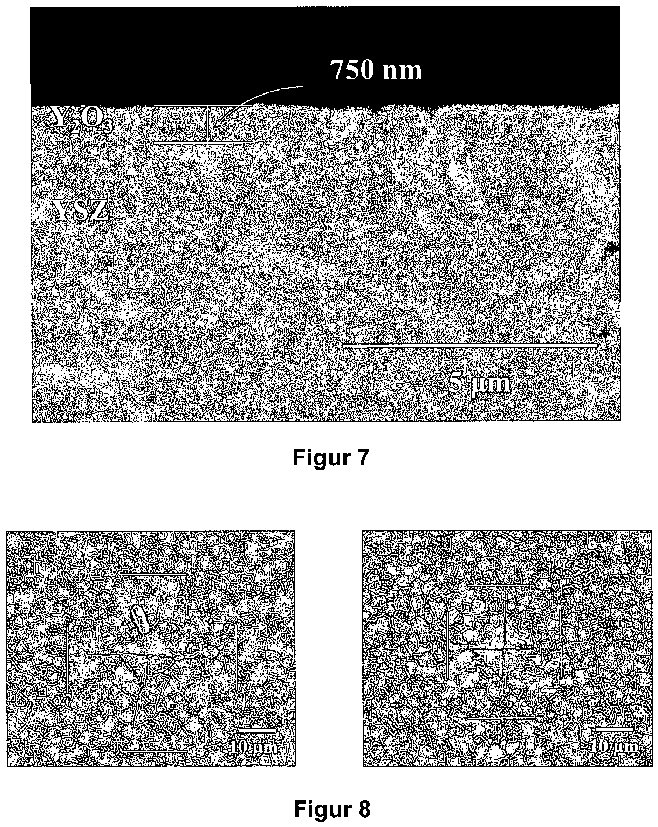

In der Figur 7 ist eine rasterelektronenmikroskopische Aufnahme einer dünnen planen $Y_2O_3$-Beschichtung, die mittels EV-PVD auf einem transparenten keramische Körper umfassend mit 8 mol-% Yttriumoxid stabilisiertes Zirkoniumdioxid (8-YSZ) aufgebracht wurde, dargestellt. Gezeigt ist die Bruchfläche des Schichtsystems.

Der transparente keramische Körper umfassend mit 8 mol-% Yttriumoxid stabilisiertes Zirkoniumdioxid (8-YSZ) wies vor der Beschichtung eine (Licht-)Durchlässigkeit von vorzugsweise mehr als 20 % im sichtbaren Bereich und vorzugsweise mehr als 50 % im Infrarot-Bereich auf. Diese Eigenschaften wurden auch nach der Beschichtung mit $Y_2O_3$ und nach der thermischen Behandlung beibehalten. Der Spannungsintensitätsfaktor $K_{IC}$, wurde aus der Risslänge c ausgehend von den Ecken des Härteeindrucks abgeschätzt und korrespondiert mit einer Oberflächenspannung von 90 MPa. Die Bruchzähigkeit ist bei dem erfindungsgemäß beschichteten und wärmebehandelten Bauteil signifikant größer (ca. 30 %) als bei einem vergleichbar unbeschichteten Bauteil. (siehe Figur 8).

Tabelle 2: Beispielhaft abgeschätzte Spannungswerte innerhalb der Keramik

| Basismaterial YSZ | 10-8-10 | 8-6-8 | $Y_2O_3$-8-$Y_2O_3$ | $Y_2O_3$-8-$Y_2O_3$ |
|---|---|---|---|---|
| Substratdicke [mm] | 2,4 | 2,4 | 2,4 | 2,4 |
| Schichtdicke [$\mu$m] | 100 | 100 | 10 | 1 |
| Zugspannungen im Substrat [MPa] | 3,2 | 4,8 | 0,34 | 0,35 |
| Druckspannungen im oberflächennahen Bereich [MPa] | -78 | -115 | -844 | -847 |

Bei den vorgenannten Keramiken lagen jeweils zweiseitige Beschichtungen vor. Dabei bedeutet "10 - 8 - 10" die Schichtenfolge 10YSZ - 8YSZ - 10YSZ und "8 - 6 - 8" die Schichtenfolge 8YSZ - 6YSZ - 8YSZ. In den letzten beiden Spalten wurde auf eine 8YSZ-Keramik beidseitig $Y_2O_3$ aufgebracht. Die vorgenannten theoretisch abgeschätzten Spannungswerte wurden dabei mit Hilfe literaturbekannten thermischen Expansionskoeffizienten [7] gemäß folgender Formel von G. De Porte et al. [8] ermittelt:

$$\sigma_{res1} = -\frac{\varepsilon_M E_1^{'}}{1 + (t_1 E_1^{'} / t_2 E_2^{'})} \quad \text{und} \quad \sigma_{res2} = -\sigma_{res1} \frac{t_1}{t_2}$$

2. Ausführungsbeispiel für die Herstellung einer polykristallinen transparenten Keramik (nicht erfindungsgemäß)

In einer weiteren Ausgestaltung weist die polykristalline Keramik $MgAl_2O_4$ und die darauf aufgebrachte Schicht MgO auf.

Ein über die Route 1a bzw. 1b hergestellte und polierte polykristalline Keramik umfassend $MgAl_2O_4$ wird dazu mit einer dünnen Schicht umfassend MgO beschichtet. Die Schichtdicke der funktionalen Beschichtung beträgt 1 $\mu$m. Die Beschichtung selbst erfolgt mittels EB-PVD (Electron Beam-Physical Vapour Deposition)-Technologie.

Die so erhaltenen Komposite wurden für 1, 3, 6 bzw. 12 Stunden in Argon auf Temperaturen von maximal 1550 °C erhitzt und im Anschluss aus dem Ofen genommen und auf Raumtemperatur abgekühlt.

Im Fall der mit MgO beschichteten $MgAl_2O_4$ Keramik führt die thermische Behandlung dazu, dass die $Mg^{2+}$-Ionen aus der funktionalen Beschichtung in das $MgAl_2O_4$ der Keramik und die $Al^{3+}$-Ionen aus der Keramik in die MgO-Beschichtung diffundieren und so in Richtung auf die Oberfläche der polykristallinen transparenten Keramik einen gradierten $MgAl_2O_4$-Bereich ausbilden, der in Richtung auf die Oberfläche mit MgO angereichert ist.

Der MgO-reiche Spinell, der sich an der Oberfläche ausbildet, weist eine größere Kristallgitterkonstante auf,

als der $Al_2O_3$-Spinell im Inneren des Bauteils, wodurch an der Oberfläche nach einer entsprechenden Temperaturbehandlung eine Restspannung erzeugt und somit die Bruchzähigkeit erhöht wird.

Der transparente keramische Körper umfassend $MgAl_2O_4$ wies vor der Beschichtung eine (Licht-)Durchlässigkeit von vorzugsweise mehr als 50 % im sichtbaren Bereich und vorzugsweise mehr als 80 % im Infrarot-Bereich auf. Diese Eigenschaften wurden auch nach der Beschichtung mit MgO und nach der thermischen Behandlung beibehalten. Die Bruchzähigkeit, die wiederum über die Vickers-Härteprüfung ermittelt wird, ist bei dem erfindungsgemäß beschichteten und wärmebehandelten Bauteil signifikant größer als bei einem vergleichbar unbeschichteten Bauteil.

3. Ausführungsbeispiel für die Herstellung eine polykristalline transparente Keramik gemäß der 2. Ausführungsform der Erfindung

Hierbei werden keramische pulverförmige Materialen eingesetzt, welche unterschiedliche Zusammensetzungen mit jeweils unterschiedlichen thermischen Ausdehnungskoeffizienten aufweisen. Der oberflächennahe Bereich mit der gradierten stöchiometrischen Zusammensetzung wird dabei durch eine Zusammensetzung gebildet, die einen geringeren thermischen Ausdehnungskoeffizienten aufweist, als der Rest der Keramik.

Das Presspulver umfasst beispielsweise als untere Schicht 8-YSZ-Pulver. Für den oberflächennahen Bereich wird höher stabilisiertes YSZ, insbesondere 12-YSZ eingesetzt. Weitere vorteilhafte Ausgestaltungen (nicht erfindungsgemäß) sind beispielsweise die Kombination von YSZ Pulver mit reinem $Y_2O_3$-Pulver für den oberflächennahen Bereich oder auch die Kombination von $MgAl_2O_4$-Pulver mit MgO-Pulver für den oberflächennahen Bereich.

Die entsprechenden trockenen Pulver werden sequentiell derart in eine Pressform gegeben, dass eine plane Grenzfläche zwischen den unterschiedlichen Materialien ausgebildet wird. Entsprechendes gilt für die Herstellung über Foliengießen mit anschließender Entbinderung. Auch hier ist wiederum eine Schichtung derart möglich, dass zuunterst und obenauf jeweils ein entsprechender oberflächennaher Bereich ausgebildet wird (Sandwich-Struktur).

Die Pulver werden je nach Verfahrensroute zunächst uniaxial oder/oder über Kaltpressen vorverdichtet und anschließend vorzugsweise bei Drücken um die 300 MPa und/oder Temperaturen um die 1450 °C gesintert bzw. nachverdichtet.

In dieser Anmeldung zitierte Literatur:

[1] Fraunhofer-Institut für Keramische Technologien und Systems IKTS: Transparente Spinell-Keramik (MgO • $Al_2O_3$),
http://www.ikts.fraunhofer.de/de/forschungsfelder/werkstoffe/oxidkeramik/transparentkera mik/transpspinellkeramik.html.

[2] Polycarbonat: D. C. Miller, M. D. Kempe, C. E. Kennedy, S. R. Kurtz, "Analysis of Transmitted Optical Spectrum Enabling Accelerated Testing of Multijunction Concentrating Photovoltaic Designs, Opt. Eng. 50 [1] 2011.

[3] Borosilicate: Optical Spectrum of Borofloat Borosilicate Glass, Valley Design Corporation, www.valleydesign.com.

[4] c-$ZrO_2$: I. Yamashita, M. Kudo, K. Tsukuma, "Development of Highly Transparent Zirconia Ceramics", TOSOH Research & Technology Review, Vol. 56 (2012).

[5] $MgAl_2O_4$: M. Rubat du Merac, PhD Thesis, Colorado School of Mines, 2014.

[6] G. R. Anstis, P. Chantiklul, B.R. Lawn and D.B. Marshall, A critical evaluation of indentation techniques for measuring fracture toughness: I, Direct crack measurements. J. Am. Ceram. Soc. 64 (1981) 533-538.

[7] H. Hayashi, T. Saitou, N. Maruyama, H. Inaba, K. Kawamura, M. Mori, "Thermal Expansion Coefficient of Yttria Stabilized Zirconia for various Yttria Conents", Solid State Ionics 176, 613-619 (2005).

[8] G. de Portu, L. Micele, G. Pezzotti, "Laminated Ceramic Structures from Oxide Systems", Composites: Part B 37 556-57 (2006).

**Patentansprüche**

**1.** Verfahren zur Herstellung einer transparenten polykristallinen Keramik,
bei dem innerhalb der Keramik wenigstens ein oberflächennaher planer transparenter Bereich ausgebildet wird, der einen geringeren thermischen Ausdehnungskoeffizienten aufweist, als in der übrigen Keramik, und
bei dem im oberflächennahen Bereich nach einer thermischen Behandlung und Abkühlung Druckspannungen generiert werden,
***dadurch gekennzeichnet,***

- **dass** auf einen transparenten polykristallinen keramischen Körper 1 mit einem thermischen Ausdehnungskoeffizienten $\alpha_B$ eine plane transparente polykristalline Beschichtung 3 mit einem thermischen Ausdehnungskoeffizienten $\alpha_S$ als oberflächennaher Bereich mit $\alpha_B > \alpha_S$ aufgebracht wird,

- wobei zwischen dem Körper und der Beschichtung eine plane transparente und ionisch oder kovalent gebundene Grenzfläche 2 erzeugt wird und
- bei dem als Material für den keramischen Körper mit $Y_2O_3$ dotiertes $ZrO_2$ (YSZ) und als Material für die Beschichtung 3 $Y_2O_3$ ausgewählt wird,

oder

- **dass** wenigstens zwei unterschiedliche keramische Ausgangspulver mit unterschiedlichen thermischen Ausdehnungskoeffizienten über eine plane Grenzfläche schichtförmig übereinander angeordnet werden,
- wobei das Ausgangspulver mit dem geringeren thermischen Ausdehnungskoeffizienten an einer Oberfläche angeordnet ist, und
- wobei als keramisches Ausgangspulver mit $Y_2O_3$ dotiertes $ZrO_2$ ausgewählt wird, welches für den planen oberflächennahen Bereich einen höheren molaren Anteil an Yttrium aufweist, als für den übrigen Bereich.

2. Verfahren nach Anspruch 1,
bei dem die Beschichtung über pulvertechnologische Verfahren oder Gasphasenabscheidung oder elektrochemische Deposition auf den keramischen Körper aufgebracht wird.

3. Verfahren nach einem der Ansprüche 1 bis 2,
bei dem die Beschichtung mit einer Schichtdicke zwischen 0,2 und 5 $\mu$m, insbesondere zwischen 0,5 und 1,5 $\mu$m auf den keramischen Körper aufgebracht wird.

4. Verfahren nach Anspruch 1,
bei dem als keramisches Pulver mit 8 mol-% $Y_2O_3$ dotiertes $ZrO_2$ (8-YSZ) und für den planen oberflächennahen Bereich mit 12 mol-% $Y_2O_3$ dotiertes $ZrO_2$(12-YSZ) eingesetzt wird.

5. Verfahren nach einem der Ansprüche 1 bis 4,
bei dem innerhalb der Keramik an zwei gegenüberliegenden Seiten ein oberflächennaher planer transparenter Bereich ausgebildet wird, der einen geringeren thermischen Ausdehnungskoeffizienten aufweist, als in der übrigen Keramik, und bei dem in den oberflächennahen Bereichen nach einer thermischen Behandlung und Abkühlung Druckspannungen generiert werden.

6. Transparente polykristalline Keramik,
herstellbar nach einem der Ansprüche 1 bis 5, die in wenigstens einem oberflächennahen planen transparenten Bereich eine Druckspannung aufweist, *dadurch gekennzeichnet,*
**dass** die Keramik YSZ umfasst und der oberflächennahe Bereich einen höheren molaren Yttriumanteil als der Rest der Keramik aufweist.

7. Keramik nach Anspruch 6,
*dadurch gekennzeichnet,*
**dass** die Keramik an zwei gegenüberliegenden Seiten in jeweils einem oberflächennahen planen transparenten Bereich eine Druckspannung aufweist.


**Claims**

1. A method for manufacturing a transparent polycrystalline ceramic, wherein at least a plane transparent region near the surface is formed within the ceramic, which region has a lower thermal expansion coefficient than in the rest of the ceramic, and
wherein compressive stresses are generated in the region near the surface after a thermal treatment and cooling, *characterized in*

- **that** a plane transparent polycrystalline coating 3 with a thermal expansion coefficient $\alpha_S$ as a region near the surface having $\alpha_B > \alpha_S$ is applied to a transparent polycrystalline ceramic body 1 having a thermal expansion coefficient $\alpha_B$,
- wherein a plane transparent and ionic or covalently bound boundary surface 2 is produced between the body and the coating and
- wherein $ZrO_2$ (YSZ) doped with $Y_2O_3$ is selected as material for the ceramic body and as material for the coating 3 $Y_2O_3$,
or

- **that** at least two different ceramic starting powders with different thermal expansion coefficients are arranged in layers above one another over a plane boundary surface,
- wherein the starting powder with the lower thermal expansion coefficient is arranged on a surface, and
- wherein $ZrO_2$ doped with $Y_2O_3$ is selected as ceramic starting powder, which has a higher molar proportion of yttrium for the plane region near the surface than for the rest of the region.

2. The method according to claim 1,
   wherein the coating is applied to the ceramic body via powder technology processes or gas phase deposition or electrochemical deposition.

3. The method of any of claims 1 to 2,
   wherein the coating with a layer thickness between 0.2 and 5 $\mu$m, in particular between 0.5 and 1.5 $\mu$m, is applied to the ceramic body.

4. The method according to claim 1,
   wherein $ZrO_2$ (8-YSZ) doped with 8 mol-% $Y_2O_3$ is used as ceramic powder and $ZrO_2$ (12-YSZ) doped with 12 mol-% $Y_2O_3$ is used for the plane region near the surface.

5. The method of any of claims 1 to 4,
   wherein a plane transparent region near the surface is formed within the ceramic on two opposite sides, which region has a lower thermal expansion coefficient than in the rest of the ceramic, and wherein compressive stresses are generated in the regions near the surface after a thermal treatment and cooling.

6. Transparent polycrystalline ceramic, manufacturable according to any of claims 1 to 5, which has a compressive stress in at least one plane transparent region near the surface,
   ***characterized in***
   **that** the ceramic comprises YSZ and the region near the surface has a higher molar yttrium content than the rest of the ceramic.

7. Ceramic according to claim 6,
   ***characterized in***
   **that** the ceramic has a compressive stress on two opposite sides in each a plane transparent region near the surface.

**Revendications**

1. Procédé de production d'une céramique polycristalline transparente,
   dans lequel on constitue au sein de la céramique au moins une partie transparente plane proche de la surface, qui a un coefficient de dilation thermique plus petit que le reste de la céramique, et
   dans lequel, dans la partie proche de la surface, on produit, après un traitement thermique et un refroidissement, des contraintes de pression,
   **caractérisé**

   - **en ce que**, sur un corps (1) en céramique polycristalline transparente ayant un coefficient $\alpha_B$ de dilatation thermique, on dépose un revêtement (3) polycristallin transparent plan ayant un coefficient $\alpha_S$ de dilatation thermique comme partie proche de la surface avec $\alpha_B > \alpha_S$,
   - dans lequel, entre le corps et le revêtement, on produit une surface (2) limite transparente plane et liée ioniquement ou par covalence, et
   - dans lequel on choisit comme matériau pour le corps en céramique $ZrO_2$(YSZ) dopé par $Y_2O_3$ et comme matériau pour le revêtement 3 $Y_2O_3$,
   ou
   - **en ce que** l'on superpose en forme de couche sur une surface limite plane au moins deux poudres de départ en céramique différentes ayant des coefficients de dilatation thermique différents,
   - dans lequel on met la poudre de départ ayant le coefficient de dilatation thermique le plus petit sur une surface, et
   - dans lequel on choisit comme poudre de départ en céramique du $ZrO_2$ dopé par du $Y_2O_3$, qui a, pour la partie plane proche de la surface, une proportion molaire plus grande en yttrium que pour la partie restante.

2. Procédé suivant la revendication 1,

dans lequel on dépose le revêtement par un procédé de technologie des poudres ou par un dépôt en phase gazeuse ou par un dépôt électrochimique sur le corps en céramique.

3. Procédé suivant l'une des revendications 1 à 2, dans lequel on dépose le revêtement en une épaisseur de couche comprise entre 0,2 et 5 $\mu$m, notamment entre 0,5 et 1,5 $\mu$m, sur le corps en céramique.

4. Procédé suivant la revendication 1, dans lequel on utilise comme poudre en céramique du $ZrO_2$(8-YSZ) dopé par 8% en mole de $Y_2O_3$ et pour la partie plane proche de la surface du $ZrO_2$(12-YSZ) dopé par 12% en mole de $Y_2O_3$ .

5. Procédé suivant l'une des revendications 1 à 4, dans lequel on constitue au sein de la céramique, sur deux côtés opposés, une partie transparente plane proche de la surface, qui a un coefficient de dilatation thermique plus petit que dans le reste de la céramique et dans lequel on produit, dans les parties proches de la surfacer après un traitement thermique et un refroidissement, des contraintes de pression.

6. Céramique polycristalline transparente, pouvant être produite suivant l'une des revendications 1 à 5, qui a une contrainte de pression dans au moins une partie transparente plane proche de la surface, **caractérisée** **en ce que** la céramique comprend du YSZ et la partie proche de la surface a une proportion molaire d'yttrium plus grande que le reste de la céramique.

7. Céramique suivant la revendication 6, **caractérisée** **en ce que** la céramique a une contrainte de pression sur deux côtés opposés dans respectivement une partie transparente plane proche de la surface.

**Figur 1 mit Daten aus [2, 3, 4, 5]**

**Figur 2**

## Route 1a

Pulver

Pulveraufarbeitung

uniaxiales
Pressen

kaltisostatisches
Pressen, opt.

Sintern

Nachverdichtung
durch
heißisostatisches
Pressen

red. Bedingungen
⇒ Ausbau von $O_2$
⇒ Dunkelfärbung

Auslagerung an
Luft, opt.

⇒ Wiedereinbau
von $O_2$
⇒ Transparenz

polieren bis zur
optischen Qualität

## Route 1b

Pulver

Pulveraufarbeitung

uniaxiales
Pressen

Heißpressen

Auslagerung an
Luft, opt.

polieren bis zur
optischen Qualität

| dip-coating | spin-coating | therm. Spritzen | PVD | CVD | elektro-chem. Deposition | Magnetron Sputtern |

**Bauteil gemäß
der ersten
Ausführungsform**

Wärmebehandlung

**Bauteil gemäß
der zweiten
Ausführungsform**

## Figur 3

## Route 2

```
┌─────────┐        ┌─────────┐
│ Pulver 1 │       │ Pulver 2 │
└────┬────┘        └────┬────┘
     ▼                  ▼
┌─────────┐        ┌─────────┐
│ Pulver-  │       │ Pulver-  │
│aufarbeitung│     │aufarbeitung│
└─────────┘        └─────────┘
```

| Pulver 1 | Pulver 2 |
|---|---|

Pulver-aufarbeitung   Pulver-aufarbeitung

sequentielles Foliengießen | sequentielles Füllen in Pressform

Entbindern | uniaxiales Pressen

Co-Sinterung

Nachverdichtung durch heißisostatisches Pressen

Auslagerung an Luft, opt.

polieren bis zur optischen Qualität

Komposit gem. 2. Ausführungsform

## Route 3

Pulver 1 | Pulver 2

Pulver-aufarbeitung | Pulver-aufarbeitung

sequentielles Füllen in Pressform

uniaxiales Pressen, opt.

Heißpressen „Co-Sinterung"

Auslagerung an Luft, opt.

polieren bis zur optischen Qualität

Komposit gem. 2. Ausführungsform

## Figur 4

16

Figur 5

Figur 6 aus [6]

**Figur 7**

**Figur 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011080378 A1
- DE 102004004259 B3
- CN 105016776 A
- US 20130078398 A1
- WO 2009038674 A2
- EP 2778252 A2
- US 5702264 A

**In der Beschreibung aufgeführte Nicht-Patentliteratur**

- **D. C. MILLER ; M. D. KEMPE ; C. E. KENNEDY ; S. R. KURTZ.** Analysis of Transmitted Optical Spectrum Enabling Accelerated Testing of Multijunction Concentrating Photovoltaic Designs. *Opt. Eng.,* 2011, vol. 50 (1
- Borosilicate: Optical Spectrum of Borofloat Borosilicate Glass. Valley Design Corporation
- **I. YAMASHITA ; M. KUDO ; K. TSUKUMA.** Development of Highly Transparent Zirconia Ceramics. *TOSOH Research & Technology Review,* 2012, vol. 56
- **M. RUBAT DU MERAC.** PhD Thesis. Colorado School of Mines, 2014
- **G. R. ANSTIS ; P. CHANTIKLUL ; B.R. LAWN ; D.B. MARSHALL.** A critical evaluation of indentation techniques for measuring fracture toughness: I, Direct crack measurements. *J. Am. Ceram. Soc.,* 1981, vol. 64, 533-538
- **H. HAYASHI ; T. SAITOU ; N. MARUYAMA ; H. INABA ; K. KAWAMURA ; M. MORI.** Thermal Expansion Coefficient of Yttria Stabilized Zirconia for various Yttria Conents. *Solid State Ionics,* 2005, vol. 176, 613-619
- **G. DE PORTU ; L. MICELE ; G. PEZZOTTI.** Laminated Ceramic Structures from Oxide Systems. *Composites: Part B,* 2006, vol. 37, 556-57